# EUROPEAN PATENT SPECIFICATION

(11) **EP 2 505 969 B1**
(45) Date of publication and mention of the grant of the patent: **07.04.2021**
(21) Application number: 10832762.8
(22) Date of filing: 04.02.2010
(51) Int. Cl.: G01F 1/66, G01F 15/14

(54) **CHANNEL MEMBER AND ULTRASONIC FLUID-MEASURING APPARATUS**
KANALELEMENT UND ULTRASCHALL-FLÜSSIGKEITSMESSER
ÉLÉMENT DE CANAL ET APPAREIL DE MESURE DE FLUIDE ULTRASONIQUE

(30) Priority: 24.11.2009 JP 2009266426
(43) Date of publication of application: 03.10.2012
(73) Proprietor: Panasonic Corporation, Kadoma-shi Osaka 571-8501 (JP)
(72) Inventor: SATOU, Masato, Osaka 540-6207 (JP); NAKANO, Makoto, Osaka 540-6207 (JP); MURAKAMI, Hirokuni, Osaka 540-6207 (JP); GOTOU, Hirokazu, Osaka 540-6207 (JP)
(74) Representative: SSM Sandmair
(86) International application number: PCT/JP2010/000693
(87) International publication number: WO 2011/064906

(56) References cited:
- EP-A1- 1 612 520
- EP-A1- 2 053 366
- JP-A- 9 021 666
- JP-A- 11 510 610
- JP-A- 58 162 815
- JP-A- 62 000 811
- JP-A- 2004 279 224
- JP-A- 2005 257 444
- JP-A- 2005 283 565
- JP-A- 2008 111 690
- JP-A- 2008 122 218

## Description

### Technical Field

The present invention relates to a channel member in which a first ultrasonic wave input/output section and a second ultrasonic wave input/output section are provided in a first side wall part and a reflecting surface is provided on an inner surface of a second side wall part and that has an ultrasonic wave transmission membrane that covers the first ultrasonic wave input/output section and the second ultrasonic wave input/output section, and an ultrasonic fluid-measuring apparatus including the channel member.

### Background Art

As a general V-path ultrasonic fluid-measuring apparatus, an apparatus is known in which a channel member is accommodated in an accommodating section of a measuring channel, and a first ultrasonic wave measuring section and a second ultrasonic wave measuring section are provided adjacent to each other in the channel member (for example, refer to Patent Literature

That is, as the channel member is formed in a square tube shape by a first side wall part, a second side wall part, a top plate part, and a bottom plate part, a fluid channel (hereinafter referred to as a "channel") is formed by the channel member. A first ultrasonic wave output section and a second ultrasonic wave output section are provided adjacent to each other in the first side wall part, and the first ultrasonic wave output section and the second ultrasonic wave output section are arranged so as to face the channel.

Additionally, the second side wall part is provided with a reflecting surface, and the reflecting surface is arranged so as to face the channel (for example, refer to Patent Literature 1).

### Citation List

### Patent Literature

Patent Literature 1: JP-A-2004-279224
Patent Literature 2: EP 1 612 520 A1

### Summary of Invention

### Technical Problem

In an ultrasonic fluid-measuring apparatus 120 in Patent Literature 1, as shown in Fig. 24, a channel 122 is formed by a channel member 121.

Ultrasonic waves 127 transmitted from a first transmitter/receiver 123 are reflected by a reflecting surface 128 and are transmitted in the shape of the letter V (V-path) up to a second transmitter/receiver 125, and the transmitted ultrasonic waves 127 are received by the second transmitter/receiver 125.

On the other hand, ultrasonic waves 129 transmitted from the second transmitter/receiver 125 are reflected by the reflecting surface 128 and are transmitted in the shape of the letter V (V-path) up to the first transmitter/receiver 123, and the transmitted ultrasonic waves 129 are received by the first transmitter/receiver 123.

The flow rate of a fluid 131 that flows through the inside of the channel 122 is calculated, on the basis of the ultrasonic waves (signals) received by the first transmitter/receiver 123 and the second transmitter/receiver 125.

Incidentally, a first ultrasonic wave output section 135 and a second ultrasonic wave output section 136 are provided at a predetermined interval in a first side wall part 133.

Hence, a pillar portion 137 is provided between the first ultrasonic wave output section 135 and the second ultrasonic wave output section 136 in the first side wall part 133. The pillar portion 137 is a portion that protrudes (overhangs) toward the channel 122.

For this reason, when the fluid 131 flows into the channel 122, there is a possibility that disturbance 155 may occur in the fluid 131 due to steps 141 and 143 and gaps 142 and 144 that are formed by the pillar portion 137.

Here, the steps 141 and 143 and the gaps 142 and 144 are present inside an included angle θ2 of the ultrasonic waves 127 that are transmitted in the shape of the letter V (V-path) and inside of the included angle θ2 of the ultrasonic waves 129 that are transmitted in the shape of the letter V (V-path). There is also a possibility that disturbance that occurs inside the included angle θ2 of the ultrasonic waves 127 or the ultrasonic waves 129 may disturb the ultrasonic waves.

The present invention has been made in order to solve the aforementioned problems, and an object thereof is to provide a channel member and an ultrasonic fluid-measuring apparatus that can prevent disturbance from occurring in ultrasonic waves due to disturbance of a fluid.

### Solution to Problem

A channel member according to the invention includes a body in which a rectangular opening is continuous along a flow direction of a fluid, the body including a first side wall part and a second side wall part that are parallel to each other, a top plate part and a bottom plate part that are bridged between the first side wall part and the second side wall part, a first ultrasonic wave input/output section and a second ultrasonic wave input/output section that are provided in the first side wall part, a reflecting surface provided on an inner surface of the second side wall part, and an ultrasonic wave transmission membrane that covers the first ultrasonic wave input/output section and the second ultrasonic wave input/output section and transmits ultrasonic waves therethrough, wherein the first ultrasonic wave input/output section and the second ultrasonic wave input/output section are continuous with each other, and the ultrasonic wave transmission membrane covers both the first ultrasonic wave input/output section and the second ultrasonic wave input/output section together.

In the invention, the first ultrasonic wave input/output section and the second ultrasonic wave input/output section are provided so as to be continuous with each other, and the first ultrasonic wave input/output section and the second ultrasonic wave input/output section are adapted so as to be both covered with the ultrasonic wave transmission membrane.

Incidentally, as the ultrasonic waves are transmitted to the reflecting surface through the first ultrasonic wave input/output section from the first transmitter/receiver, and the ultrasonic waves reflected by the reflecting surface are received by the second transmitter/receiver, the ultrasonic waves are transmitted in the shape of the letter V (V-path).

On the other hand, as the ultrasonic waves are transmitted to the reflecting surface through the second ultrasonic wave input/output section from the second transmitter/receiver, and the ultrasonic waves reflected by the reflecting surface are received by the first transmitter/receiver, the ultrasonic waves are transmitted in the shape of the letter V (V-path).

Here, as mentioned above, by together covering both the first ultrasonic wave input/output section and the second ultrasonic wave input/output section with the ultrasonic wave transmission membrane, a region inside the ultrasonic waves, which are transmitted in the shape of the letter V, can be secured flatly.

There is no concern that a fluid that flows through the inside of the channel member causes disturbance in the region inside the ultrasonic waves that are transmitted in the shape of the letter V.

This can prevent disturbance from occurring in ultrasonic waves due to disturbance of a fluid.

Additionally, by making the first ultrasonic wave input/output section and the second ultrasonic wave input/output section continuous with each other, a step portion can be removed from between the first ultrasonic wave input/output section and the second ultrasonic wave input/output section.

Hence, the ultrasonic wave transmission membrane that covers the first ultrasonic wave input/output section and the second ultrasonic wave input/output section is provided on a front surface side (that is, opposite side of the channel) of the first side wall part.

By providing the ultrasonic wave transmission membrane on the front surface side of the first side wall part, it is possible to integrally mold the first side wall part, the second side wall part, the top plate part, and the bottom plate part.

This can enhance the degree of freedom in design when the channel member is formed.

In the channel member according to the invention, the first side wall part, the second side wall part, the top plate part, and the bottom plate part may be integral.

In the invention, by integrating the first side wall part, the second side wall part, the top plate part, and the bottom plate part, the number of components can be reduced.

The channel member according to an embodiment of the invention includes a partition plate that divides an inside of the channel member into a plurality of flat channels, and the partition plate is molded integrally with the first side wall part and the second side wall part.

According to an embodiment of the invention, by molding the partition plate integrally with the first side wall part and the second side wall part, time and effort for attaching the partition plate to the first side wall part and the second side wall part can be saved.

A channel member according to the invention includes a body in which a rectangular opening is continuous along a flow direction of a fluid, the body including a first side wall part and a second side wall part that are parallel to each other, a first ultrasonic wave input/output section and a second ultrasonic wave input/output section that are provided in the first side wall part, and a reflecting surface provided on an inner surface of the second side wall part, wherein the first ultrasonic wave input/output section and the second ultrasonic wave input/output section are continuous with each other.

In the invention, the first ultrasonic wave input/output section and the second ultrasonic wave input/output section are provided so as to be continuous with each other.

As mentioned above, as the ultrasonic waves are transmitted to the reflecting surface through the first ultrasonic wave input/output section from the first transmitter/receiver, and the ultrasonic waves reflected by the reflecting surface are received by the second transmitter/receiver, the ultrasonic waves are transmitted in the shape of the letter V (V-path).

On the other hand, as the ultrasonic waves are transmitted to the reflecting surface through the second ultrasonic wave input/output section from the second transmitter/receiver, and the ultrasonic waves reflected by the reflecting surface are received by the first transmitter/receiver, the ultrasonic waves are transmitted in the shape of the letter V (V-path).

Here, by providing the first ultrasonic wave input/output section and the second ultrasonic wave input/output section so as to be continuous with each other, a step portion (pillar portion) can be removed from between the first ultrasonic wave input/output section and the second ultrasonic wave input/output section.

Hence, since a region inside the ultrasonic waves that are transmitted in the shape of the letter V can be secured flatly, there is no concern that the fluid that flows through the inside of the channel member may be disturbed in the region inside the ultrasonic waves that are transmitted in the shape of the letter V.

This can prevent disturbance from occurring in ultrasonic waves due to disturbance of a fluid.

According to the invention, housing recesses are formed on the front surface side of the first side wall part by forming stepped portions at peripheral wall portions of the first ultrasonic wave input/output section and the second ultrasonic wave input/output section; and the ultrasonic wave transmission membrane is fitted into the housing recesses from the front surface side of the first side wall part.

In an ultrasonic fluid-measuring apparatus according to an embodiment of the invention, the channel member is used.

By using the channel member for the ultrasonic fluid-measuring apparatus according to an embodiment of the invention, it is possible to provide an ultrasonic fluid-measuring apparatus that can prevent disturbance from occurring in the ultrasonic waves due to disturbance of a fluid.

This enables the flow rate of a fluid to be precisely measured by the ultrasonic fluid-measuring apparatus.

### Advantageous Effects of Invention

According to the channel member and the ultrasonic fluid-measuring apparatus of the invention, the effect that disturbance can be prevented from occurring in the ultrasonic waves due to disturbance of a fluid is exhibited by continuously providing the first ultrasonic wave input/output section and the second ultrasonic wave input/output section, covering together both the first ultrasonic wave input/output section and the second ultrasonic wave input/output section with the ultrasonic wave transmission membrane, and flatly securing the region inside the ultrasonic waves that are transmitted in the shape of the letter V.

### Brief Description of Drawings

Fig. 1 is a perspective view showing an ultrasonic fluid-measuring apparatus according to a first embodiment of the invention.
Fig. 2 is an exploded perspective view showing the ultrasonic fluid-measuring structure of Fig. 1.
Fig. 3 is a cross-sectional view taken along a line A-A in Fig. 1.
Fig. 4 is a cross-sectional view taken along a line B-B in Fig. 3.
Fig. 5 is a view as seen in the direction of an arrow C in Fig. 6.
Fig. 6 is a perspective view showing a fluid member according to the first embodiment.
Fig. 7 is a cross-sectional view taken along a line D-D in Fig. 5.
Fig. 8 is a cross-sectional view taken along a line E-E in Fig. 5.
Fig. 9 is a perspective view describing the relationship between a fluid channel and partition plates according to the first embodiment.
Fig. 10 is a cross-sectional view describing an example in which the fluid channel according to the first embodiment is integrally molded.
Fig. 11 is a cross-sectional view showing a fluid member according to a second embodiment not part of the invention.
Fig. 12 is an exploded perspective view describing an example in which the fluid channel according to the second embodiment not part of the invention is assembled.
Fig. 13 is a cross-sectional view showing a state where a fluid member and an ultrasonic measuring section according to a third embodiment not part of the invention are assembled.
Fig. 14 is a cross-sectional view showing a state where the fluid member and the ultrasonic measuring section in Fig. 13 are disassembled.
Fig. 15 is a cross-sectional view describing an example in which the fluid channel according to the third embodiment not part of the invention is integrally molded.
Fig. 16 is a cross-sectional view showing a state where a fluid member and an ultrasonic measuring section according to a fourth embodiment not part of the invention are assembled.
Fig. 17 is a cross-sectional view showing a state where the fluid member and the ultrasonic measuring section in Fig. 16 are disassembled.
Fig. 18 is a cross-sectional view describing an example in which the fluid channel according to the fourth embodiment not part of the invention is integrally molded.
Fig. 19 is a cross-sectional view showing a fluid member according to a fifth embodiment not part of the invention.
Fig. 20 is an exploded perspective view describing an example in which the fluid channel according to the fifth embodiment not part of the invention is assembled.
Fig. 21 is a cross-sectional view showing a fluid member according to a sixth embodiment not part of the invention.
Fig. 22 is a perspective view showing an ultrasonic fluid-measuring apparatus according to a seventh embodiment of the invention.
Fig. 23 is a schematic view showing an ultrasonic fluid-measuring apparatus according to an eighth embodiment of the invention.

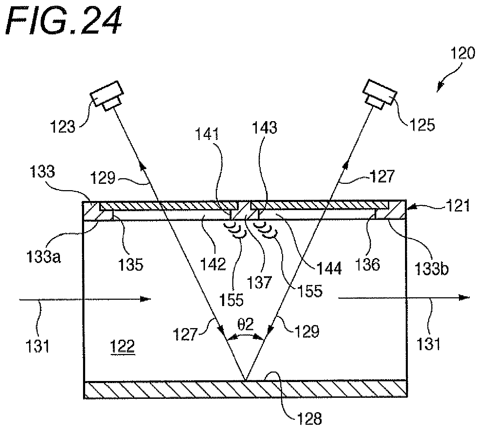

Fig. 24 is a cross-sectional view invention showing a related-art ultrasonic fluid-measuring apparatus.

### Description of Embodiments

An ultrasonic fluid-measuring apparatus 10 and channel members 15, and 70, 80, 90, 100, 110, 130, 140 according to a plurality of embodiment, respectively part and not part, of the invention will be described below with reference to the drawings.

### (First Embodiment)

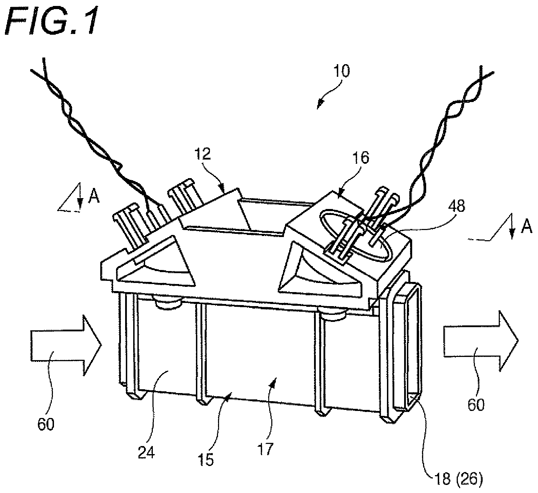

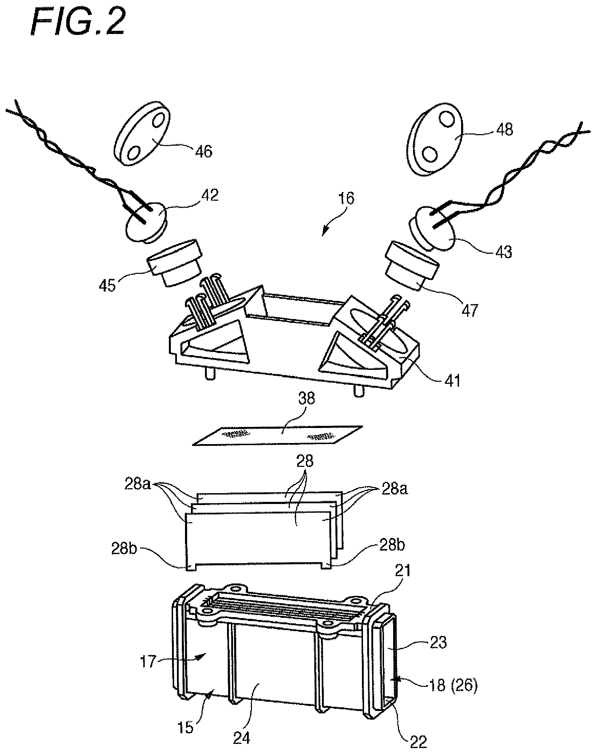

As shown in Figs. 1 to 5, the ultrasonic fluid-measuring apparatus 10 according to a first embodiment of the invention includes an ultrasonic fluid-measuring structure 12 that measures a flow rate of a fluid.

The ultrasonic fluid-measuring structure 12 includes a channel member 15, and an ultrasonic measuring section 16 adjacent to the channel member 15.

The channel member 15 has a channel body (body) 17 in which a rectangular opening 18 is continuous along a flow direction of a fluid.

The channel body 17 includes a first side wall part 21 adjacent to the ultrasonic measuring section 16, a second side wall part 22 parallel to the first side wall part 21, a top plate part 23 bridged between top portions of the first side wall part 21 and the second side wall part 22, and a bottom plate part 24 bridged between bottom portions of the first side wall part 21 and the second side wall part 22.

The first side wall part 21, the second side wall part 22, the top plate part 23, and the bottom plate part 24 are formed integrally (specifically, resin-molded), and are resinous members in which a square tube type channel 26 (that is, "channel in which the rectangular opening 18 is continuous along a flow direction of a fluid") is formed by the first side wall part 21, the second side wall part 22, the top plate part 23, and the bottom plate part 24.

The channel body 17 includes a plurality of partition plates 28 that divide the inside of the channel body 17 (that is, channel 26) into a plurality of flat channels 27, a first ultrasonic wave input/output section 32 and a second ultrasonic wave input/output section 33 provided adjacent to each other in the first side wall part 21, a reflecting surface 35 provided on the inner surface of the second side wall part 22, and an ultrasonic wave transmission membrane 38 that covers the first ultrasonic wave input/output section 32 and the second ultrasonic wave input/output section 33 together.

When the channel body 17 is resin-molded, the plurality of partition plates 28 are molded integrally (insert-molded) with the first side wall part 21 and the second side wall part 22.

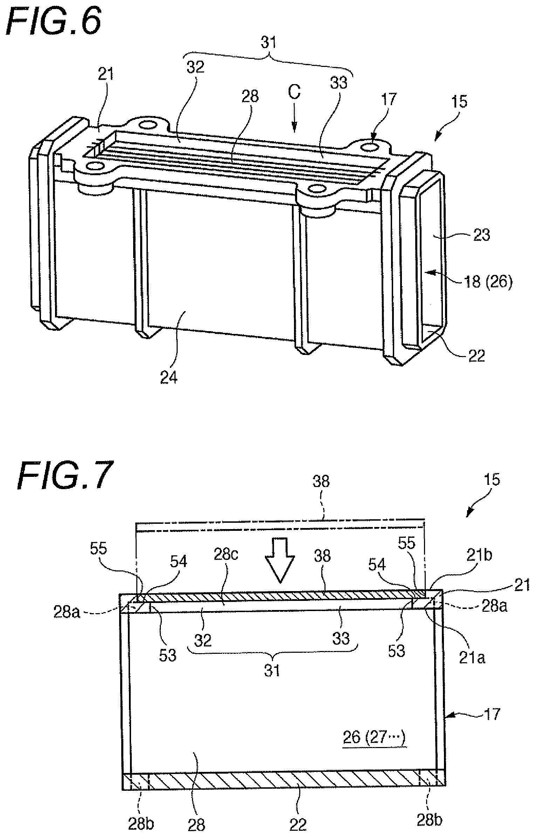

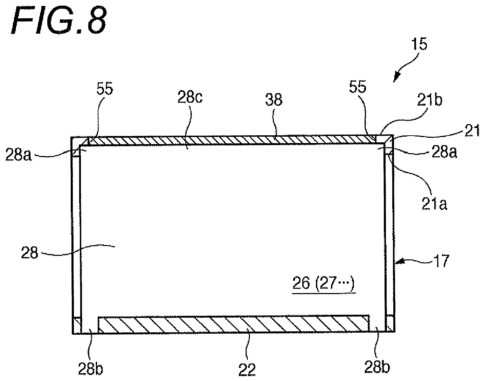

Specifically, integral molding (insert molding) is performed in a state where upper corner portions 28a of the plurality of partition plates 28 are molded integrally (insert-molded) with the first side wall part 21, and as shown in Figs. 7 and 8, lower protruding pieces 28b of the plurality of partition plates 28 are passed through the second side wall part 22 and tips thereof do not protrude to the outside of the second side wall part 22.

The relative positions of the partition plates 28 with respect to a mold are maintained by making the upper corner portions 28a and the tips of the lower protruding pieces 28b abut on the inner surface of the mold. Then, by injecting resin into the mold in this state, the partition plates can be positioned easily at predetermined positions with respect to the channel body 17.

Here, in the first embodiment, as shown in Figs. 6 to 8, an ultrasonic wave input/output section 31 is formed as the first ultrasonic wave input/output section 32 and the second ultrasonic wave input/output section 33, which are adjacent to each other, are formed continuously.

The first ultrasonic wave input/output section 32 and the second ultrasonic wave input/output section 33 (that is, the ultrasonic wave input/output section 31), which are provided continuously, are together covered with the ultrasonic wave transmission membrane 38.

Although a mesh member through which ultrasonic waves 36 are transmitted as an example is illustrated as the ultrasonic wave transmission membrane 38, the invention is not limited to this, and it is also possible to use other members, such as a punching metal member.

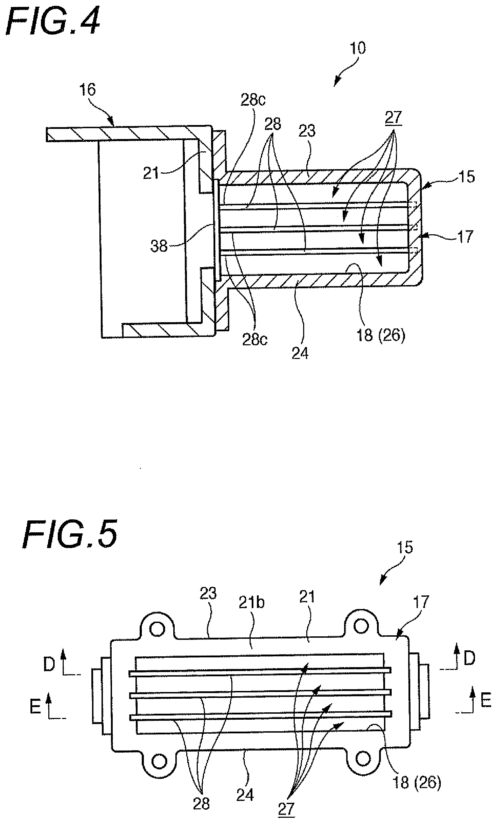

End portions 28c (also see Fig. 4) of the plurality of partition plates 28 are brought into contact with the ultrasonic wave transmission membrane 38.

By bringing the ultrasonic wave transmission membrane 38 into contact with the end portions 28c of the plurality of partition plates 28, the gap between the ultrasonic wave transmission membrane 38 and the end portions 28c of the partition plates 28 can be eliminated.

Hence, there is no concern that disturbance is generated in a fluid at the gap between the ultrasonic wave transmission membrane 38 and the end portions 28c of the partition plates 28. This can prevent disturbance from occurring in ultrasonic waves due to disturbance of a fluid.

As shown in Fig, 3, the first side wall part 21 of the channel body 17 is provided with the ultrasonic measuring section 16.

The ultrasonic measuring section 16 includes a sensor block 41 provided at the first side wall part 21 of the channel body 17, a first transmitter/receiver 42 provided in an upstream region of the sensor block 41, and a second transmitter/receiver 43 provided in a downstream region of the sensor block 41.

That is, the first transmitter/receiver 42 and the second transmitter/receiver 43 are provided so as to be adjacent to each other in the first side wall part 21 of the channel body 17 via the sensor block 41.

The first transmitter/receiver 42 is attached to a predetermined attachment region by a first sensor packing 45 and a first sensor fixing member 46.

Similarly, the second transmitter/receiver 43 is attached to a predetermined attachment region by a second sensor packing 47 and a second sensor fixing member 48.

The first transmitter/receiver 42 is a transmitter/receiver that transmits the ultrasonic waves 36 to the reflecting surface 35 through the first ultrasonic wave input/output section 32 and receives the ultrasonic waves 37 reflected by the reflecting surface 35.

The second transmitter/receiver 43 is a transmitter/receiver that transmits the ultrasonic waves 37 to the reflecting surface 35 through the second ultrasonic wave input/output section 33 and receives ultrasonic waves 36 reflected by the reflecting surface 35.

Next, a configuration in which the ultrasonic wave transmission membrane 38 is attached to the first side wall part 21 of the channel body 17 will be described in detail with reference to Fig. 7.

As shown in Fig. 7, the first side wall part 21 is formed with the ultrasonic wave input/output section 31. In the ultrasonic wave input/output section 31, the first ultrasonic wave input/output section 32 and the second ultrasonic wave input/output section 33, which are adjacent to each other, are formed continuously.

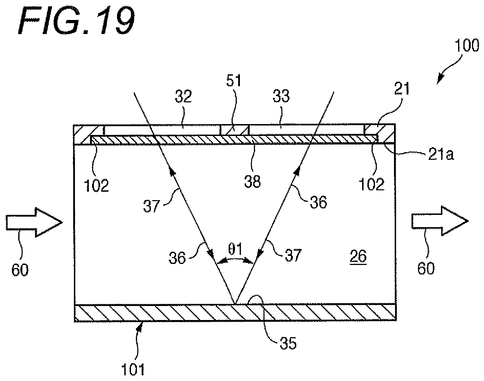

By making the first ultrasonic wave input/output section 32 and the second ultrasonic wave input/output section 33 continuous with each other, a step portion (pillar portion) 51 (refer to Fig. 19) can be removed from between the first ultrasonic wave input/output section 32 and the second ultrasonic wave input/output section 33.

By removing the step portion (pillar portion) 51 from between the first ultrasonic wave input/output section 32 and the second ultrasonic wave input/output section 33, it is not necessary to provide the ultrasonic wave transmission membrane 38 on a rear surface 21a side (that is, the channel 26 side) of the first side wall part 21.

Hence, the ultrasonic wave transmission membrane 38 that covers the first ultrasonic wave input/output section 32 and the second ultrasonic wave input/output section 33 can be provided on a front surface 21b side (that is, opposite side of the channel 26) of the first side wall part 21.

That is, stepped portions 54 are formed at a peripheral wall portion 53 of the ultrasonic wave input/output section 31, and a housing recess 55 is formed on the front surface 21b side (that is, opposite side of the channel 26) of the first side wall part 21.

Then, by fitting the ultrasonic wave transmission membrane 38 into the housing recess 55, the ultrasonic wave transmission membrane 38 is attached from the front surface 21b side (that is, opposite side of the channel 26) of the first side wall part 21.

Here, by attaching the ultrasonic wave transmission membrane 38 from the front surface 21b side (that is, opposite side of the channel 26) of the first side wall part 21, the peripheral wall portion 53 of the ultrasonic wave input/output section 31 becomes a stepped portion with respect to the channel 26.

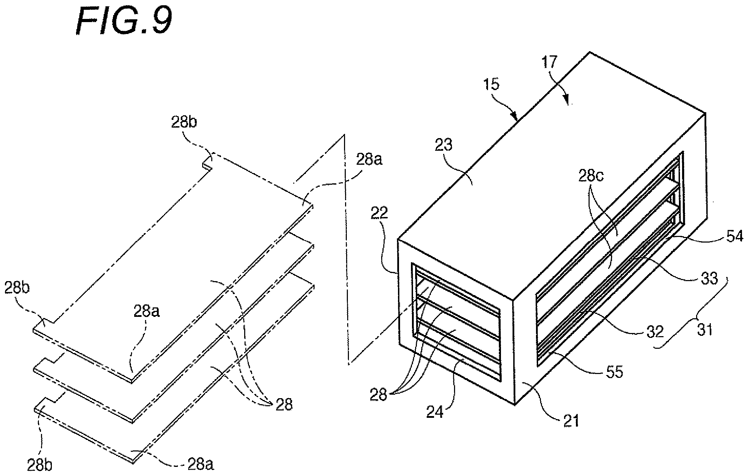

As described above, by attaching the ultrasonic wave transmission membrane 31 from the front surface 21b side (that is, opposite side of the channel 26) of the first side wall part 21, the channel member 17 can be integrally resin-molded as shown in Fig. 9.

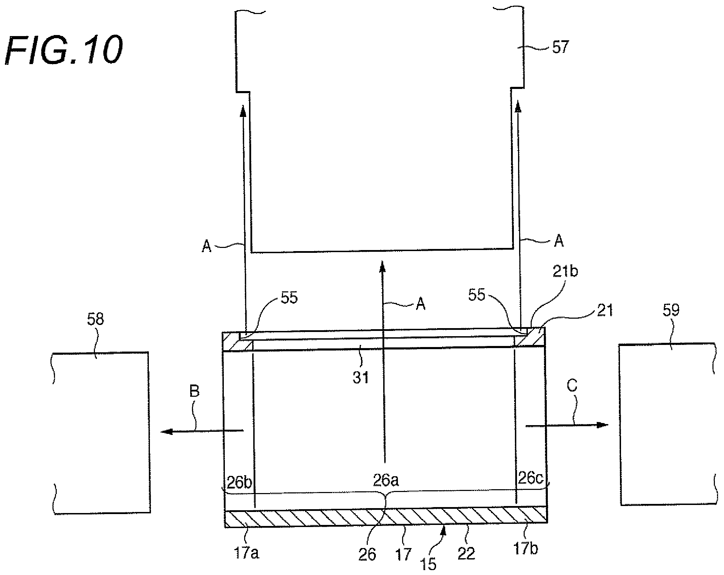

That is, as shown in Fig. 10, by extracting a mold 57 in the direction of an arrow A from the ultrasonic wave input/output section 31 of the channel member 15 (channel body 17), a central portion 26a of the channel 26 is formed, and the housing recess 55 is formed on the front surface 21b side (that is, opposite side of the channel 26) of the first side wall part 21.

Additionally, by extracting a slide mold 58 in the direction of an arrow B from one end portion 17a of the channel body 17, one end portion 26b of the channel 26 can be formed.

Moreover, by extracting a slide mold 59 in the direction of an arrow C from the other end portion 17b of the channel body 17, the other end portion 26c of the channel 26 can be formed.

Thereby, the first side wall part 21, the second side wall part 22, the top plate part 23, and the bottom plate part 24 (refer to Fig. 9), which constitute the channel body 17, are integrally resin-molded.

By integrating the first side wall part 21, the second side wall part 22, the top plate part 23, and the bottom plate part 24, the number of components can be reduced.

Here, as shown in Fig. 9, when the channel body 17 is resin-molded, the plurality of partition plates 28 are insert-molded into the first side wall part 21 and the second side wall part 22.

By molding the plurality of partition plates 28 integrally with the first side wall part 21 and the second side wall part 22, time and effort for attaching the plurality of partition plates 28 to the first side wall part 21 and the second side wall part 22 can be saved.

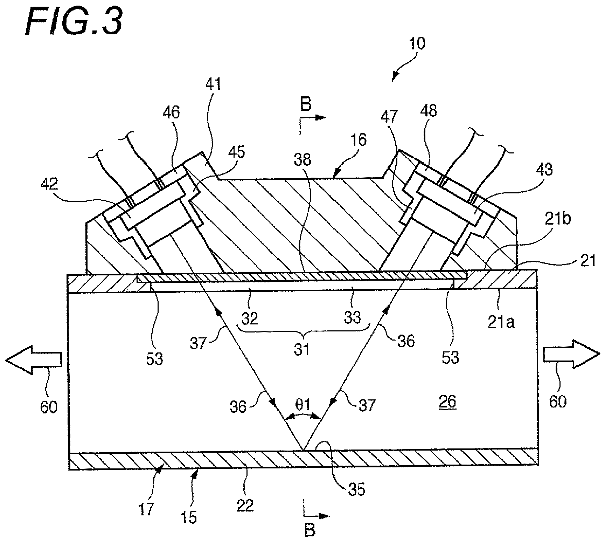

Next, an example in which the flow rate of a fluid is measured by the ultrasonic fluid-measuring apparatus 10 will be described with reference to Fig. 3.

As mentioned above, the ultrasonic wave input/output section 31 is formed as the first ultrasonic wave input/output section 32 and the second ultrasonic wave input/output section 33 are provided continuously.

The first ultrasonic wave input/output section 32 and the second ultrasonic wave input/output section 33 (that is, the ultrasonic wave input/output section 31), which are provided continuously, are together covered with the ultrasonic wave transmission membrane 38.

Additionally, by attaching the ultrasonic wave transmission membrane 38 from the front surface 21b side (that is, opposite side of the channel 26) of the first side wall part 21, the peripheral wall portion 53 of the ultrasonic wave input/output section 31 becomes a stepped portion with respect to the channel 26 (rear surface 21a).

As the ultrasonic waves 36 transmitted from the first transmitter/receiver 42 are transmitted to the reflecting surface 35 through the first ultrasonic wave input/output section 32, and the ultrasonic waves 36 reflected in the reflecting surface 35 are received by the second transmitter/receiver 43, the ultrasonic waves 36 are transmitted in the shape of the letter V (V-path).

On the other hand, as the ultrasonic waves 37 transmitted from the second transmitter/receiver 43 are transmitted to the reflecting surface 35 through the second ultrasonic wave input/output section 33, and the ultrasonic waves 37 reflected in the reflecting surface 35 are received by the first transmitter/receiver 42, the ultrasonic waves 36 are transmitted in the shape of the letter V (V-path).

Here, by continuously providing the first ultrasonic wave input/output section 32 and the second ultrasonic wave input/output section 33 to form the ultrasonic wave input/output section 31 and together covering the ultrasonic wave input/output section 31 with the ultrasonic wave transmission membrane 38, a region (a region on the side of an included angle 01, i.e., the ultrasonic wave transmission membrane) inside the ultrasonic waves 36, which are transmitted in the shape of the letter V, can be secured flatly.

Additionally, the region inside the ultrasonic waves 37 that are transmitted in the shape of the letter V (the region on the side of the included angle θ1, i.e., the ultrasonic wave transmission membrane 38) can be secured flatly.

Hence, there is no concern that a fluid (gas as an example) that flows through the inside (channel 26) of the channel body 17 causes disturbance in the region inside the ultrasonic waves 36 that are transmitted in the shape of the letter V, or the region inside the ultrasonic waves 37 that are transmitted in the shape of the letter V.

Additionally, as the peripheral wall portion 53 of the ultrasonic wave input/output section 31 becomes a stepped portion with respect to the channel 26 (rear surface 21a), a fluid (gas as an example) 60 that flows through the inside of the channel body 17 (channel 26) may cause disturbance at the peripheral wall portion 53 (that is, the stepped portion).

However, the peripheral wall portion 53 (that is, the stepped portion) is located outside the included angle θ1 of the ultrasonic waves 36 that are transmitted in the shape of the letter V or outside the included angle θ1 of the ultrasonic waves 37 that are transmitted in the shape of the letter V.

Hence, even if disturbance occurs in the fluid 60 in the peripheral wall portion 53 (that is, the stepped portion), there is no concern that disturbance occurs in the ultrasonic waves 36 and the ultrasonic waves 37.

Thereby, disturbance can be prevented from occurring in the ultrasonic waves 36 and the ultrasonic waves 37 due to disturbance of the fluid 60, and the flow rate of a fluid can be precisely measured by the ultrasonic fluid-measuring apparatus 10.

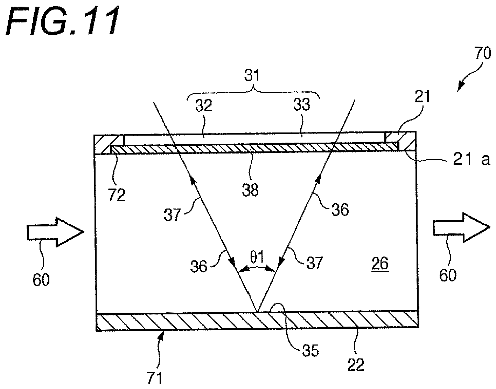

Next, a second embodiment to a fifth embodiment will be described with reference to Figs. 11 to 20.

In addition, in the second embodiment to the fifth embodiment, members that are the same as or similar to the channel member 15 of the first embodiment are designated by the same reference numerals, and the description thereof is omitted.

### (Second Embodiment)

As shown in Fig. 11, a channel member 70 according to a second embodiment not part of the invention has a channel body (body) 71 instead of the channel body 17.

The channel body 71 is adapted so that the ultrasonic wave transmission membrane 38 is attached from the rear surface 21a side (that is, the channel 26 side) of the first side wall part 21 by forming a housing recess 72 on the rear surface 21a side (that is, the channel 26 side) of the first side wall part 21 and fitting the ultrasonic wave transmission membrane 38 into the housing recess 72.

The first ultrasonic wave input/output section 32 and the second ultrasonic wave input/output section 33 (that is, the ultrasonic wave input/output section 31), which are provided continuously, are together covered with the ultrasonic wave transmission membrane 38 from the rear surface 21a side (that is, the channel 26 side) of the first side wall part 21.

Hence, the region (region on the side of the included angle θ1, that is, the ultrasonic wave transmission membrane 38) inside the ultrasonic waves 36 that are transmitted in the shape of the letter V, or the region (region on the side of the included angle θ1, that is, the ultrasonic wave transmission membrane 38) inside the ultrasonic waves 37 that are transmitted in the shape of the letter V can be secured flatly.

Moreover, by providing the ultrasonic wave transmission membrane 38 from the rear surface 21a side (that is, the channel 26 side) of the first side wall part 21, the ultrasonic wave transmission membrane 38 can be provided flatly with respect to the channel 26 (rear surface 21a).

Thereby, there is no possibility that the fluid 60 that flows through the inside (channel 26) of the channel body 71 causes disturbance in each region inside or outside the ultrasonic waves 36 that are transmitted in the shape of the letter V or in each region inside or outside the ultrasonic waves 37 that are transmitted in the shape of the letter V.

Accordingly, similarly to the first embodiment, disturbance can be prevented from occurring in the ultrasonic waves 36 and the ultrasonic waves 37 due to disturbance of the fluid 60, and the flow rate of a fluid can be precisely measured by the ultrasonic fluid-measuring apparatus 10.

Here, as mentioned above, in the channel member 70 (channel body 71) of the second embodiment not part of the invention, the housing recess 72 is formed on the rear surface 21a side (that is, the channel 26 side) of the first side wall part 21.

Hence, it is difficult to integrally resin-mold the channel body 71 unlike the channel body 17 of the first embodiment.

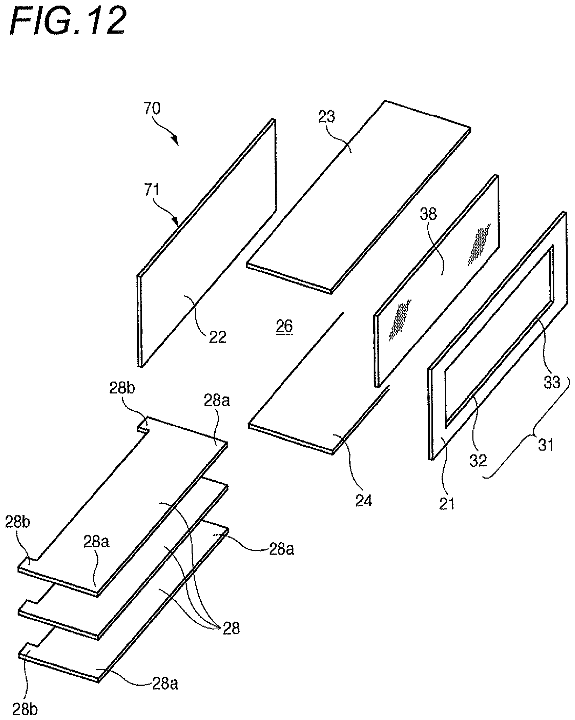

Thus, as shown in Fig. 12, the first side wall part 21, the second side wall part 22, the top plate part 23, and the bottom plate part 24 are constituted by individual members, respectively.

Then, when the first side wall part 21, the second side wall part 22, the top plate part 23, and the bottom plate part 24 are assembled, the ultrasonic wave transmission membrane 38 is attached to the housing recess 72 (refer to Fig. 11) from the rear surface 21a side (that is, the channel 26 side) of the first side wall part 21.

In addition, when the first side wall part 21, the second side wall part 22, the top plate part 23, and the bottom plate part 24 are assembled, the plurality of partition plates 28 (specifically, the plurality of upper corner portions 28a or the lower protruding pieces 28b of the partition plates 28) are assembled.

In this way, by constituting the first side wall part 21, the second side wall part 22, the top plate part 23, and the bottom plate part 24 from the individual members, respectively, the channel member 70 (channel body 71) of the second embodiment not part of the invention can be assembled.

Here, in the channel body 71, the first side wall part 21, the second side wall part 22, the top plate part 23, and the bottom plate part 24 are formed by resinous members, respectively.

Here, according to the channel member 70 of the second embodiment not part of the invention, the same effects as the channel member 15 of the first embodiment can be obtained.

### (Third Embodiment)

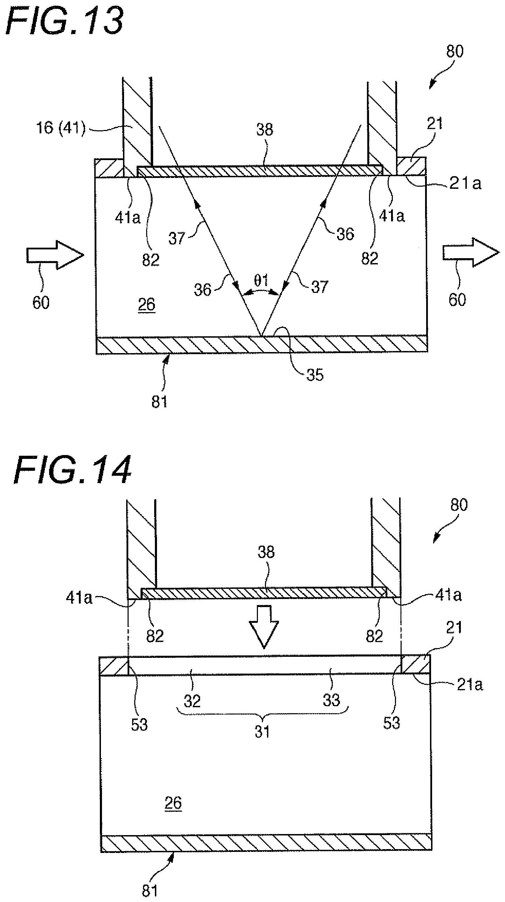

As shown in Figs. 13 and 14, a channel member 80 according to a third embodiment not part of the invention has a channel body (body) 81 instead of the channel body 17.

In the channel body 81, the ultrasonic wave input/output section 31 (the first ultrasonic wave input/output section 32 and the second ultrasonic wave input/output section 33) is formed so that the sensor block 41 of the ultrasonic measuring section 16 can be fitted thereinto.

The sensor block 41 of the ultrasonic measuring section 16 is formed with a housing recess 82, and the ultrasonic wave transmission membrane 38 is fitted into the housing recess 82. Hence, by fitting the sensor block 41 into the ultrasonic wave input/output section 31, the ultrasonic wave input/output section 31 is covered with the ultrasonic wave transmission membrane 38.

The first ultrasonic wave input/output section 32 and the second ultrasonic wave input/output section 33 (that is, the ultrasonic wave input/output section 31), which are provided continuously, are together covered with the ultrasonic wave transmission membrane 38.

Hence, the region (region on the side of the included angle θ1, that is, the ultrasonic wave transmission membrane 38) inside the ultrasonic waves 36 that are transmitted in the shape of the letter V, or the region (region on the side of the included angle θ1, that is, the ultrasonic wave transmission membrane 38) inside the ultrasonic waves 37 that are transmitted in the shape of the letter V can be secured flatly.

Moreover, by fitting the ultrasonic wave transmission membrane 38 into the housing recess 82 of the sensor block 41, the ultrasonic wave transmission membrane 38 can be arranged flatly with respect to a bottom surface 41a of the sensor block 41.

In addition, by fitting the sensor block 41 into the ultrasonic wave input/output section 31 (the first ultrasonic wave input/output section 32 and the second ultrasonic wave input/output section 33), the bottom surface 41a of the sensor block 41 and the ultrasonic wave transmission membrane 38 can be provided flatly with respect to the channel 26 (rear surface 21a).

Thereby, there is no possibility that the fluid 60 that flows through the inside (channel 26) of the channel body 81 causes disturbance in each region inside or outside the ultrasonic waves 36 that are transmitted in the shape of the letter V or in each region inside or outside the ultrasonic waves 37 that are transmitted in the shape of the letter V.

Accordingly, similarly to the first embodiment, disturbance can be prevented from occurring in the ultrasonic waves 36 and the ultrasonic waves 37 due to disturbance of a fluid 60, and the flow rate of the fluid 60 can be precisely measured by the ultrasonic fluid-measuring apparatus 10.

Here, in the channel member 80 (channel body 81) of the third embodiment not part of the invention, the peripheral wall portion 53 of the ultrasonic wave input/output section 31 is formed flatly.

Hence, the channel body 81 can be integrally resin-molded similarly to the channel body 17 of the first embodiment.

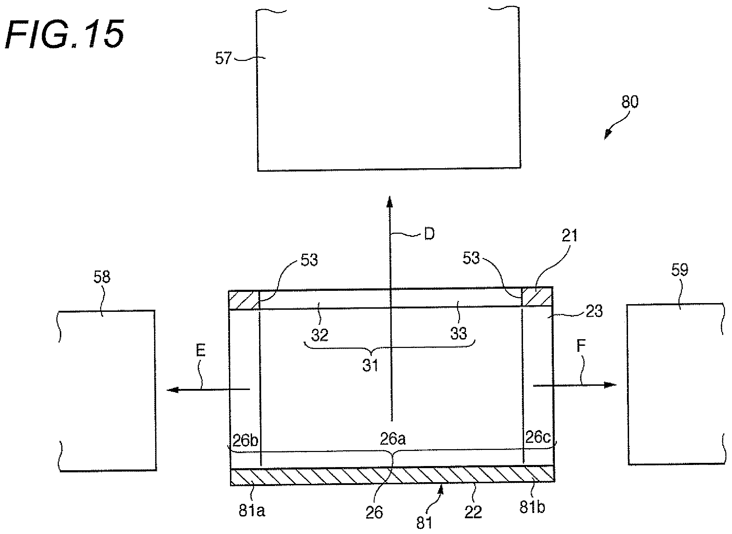

That is, as shown in Fig. 15, by extracting the mold 57 in the direction of an arrow D from the ultrasonic wave input/output section 31 of the channel body 81, the central portion 26a of the channel 26 is formed, and the first side wall part 21 is formed with the ultrasonic wave input/output section 31.

Additionally, by extracting the slide mold 58 in the direction of an arrow E from one end portion 81a of the channel body 81, one end portion 26b of the channel 26 can be formed.

Moreover, by extracting the slide mold 59 in the direction of an arrow F from the other end portion 81b of the channel body 81, the other end portion 26c of the channel 26 can be formed.

Thereby, the first side wall part 21, the second side wall part 22, the top plate part 23, and the bottom plate part 24 (refer to Fig. 9), which constitute the channel body 81, are integrally resin-molded, similarly to the first embodiment.

By integrating the first side wall part 21, the second side wall part 22, the top plate part 23, and the bottom plate part 24, the number of components can be reduced.

Here, when the channel body 81 is resin-molded, similarly to the first embodiment, the plurality of partition plates 28 (refer to Fig. 9) are insert-molded into the first side wall part 21 and the second side wall part 22.

By molding the plurality of partition plates 28 integrally with the first side wall part 21 and the second side wall part 22, time and effort for attaching the plurality of partition plates 28 to the first side wall part 21 and the second side wall part 22 can be saved.

Here, according to the channel member 80 of the third embodiment not part of the invention, the same effects as the channel member 15 of the first embodiment can be obtained.

### (Fourth Embodiment)

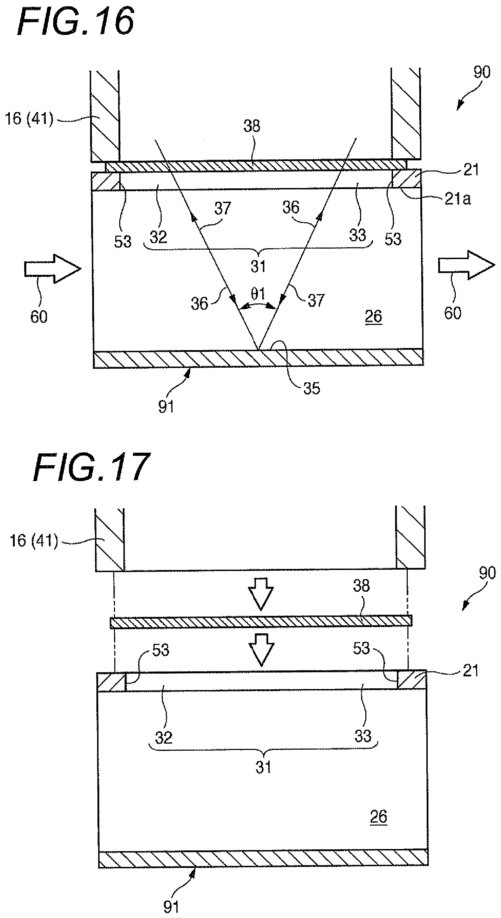

As shown in Figs. 16 and 17, a channel member 90 according to a fourth embodiment not part of the invention has a channel body (body) 91 instead of the channel body 17.

In the channel body 91, the first side wall part 21 is formed so as to be able to sandwich the ultrasonic wave transmission membrane 38 between the first side wall part 21 and the sensor block 41.

That is, by sandwiching the ultrasonic wave transmission membrane 38 between the first side wall part 21 of the channel body 91 and the sensor block 41, the ultrasonic wave input/output section 31 is covered with the ultrasonic wave transmission membrane 38.

The first ultrasonic wave input/output section 32 and the second ultrasonic wave input/output section 33 (that is, the ultrasonic wave input/output section 31), which are provided continuously, are together covered with the ultrasonic wave transmission membrane 38.

Hence, the region (region on the side of the included angle θ1, that is, the ultrasonic wave transmission membrane 38) inside the ultrasonic waves 36 that are transmitted in the shape of the letter V, or the region (region on the side of the included angle θ1, that is, the ultrasonic wave transmission membrane 38) inside the ultrasonic waves 37 that are transmitted in the shape of the letter V can be secured flatly.

Here, by sandwiching the ultrasonic wave transmission membrane 38 between the first side wall part 21 and the sensor block 41, the peripheral wall portion 53 of the ultrasonic wave input/output section 31 becomes a stepped portion with respect to the channel 26 (rear surface 21a).

Hence, the fluid 60 that flows through the inside of the channel body 91 (channel 26) may cause disturbance at the peripheral wall portion 53 (that is, the stepped portion).

However, the peripheral wall portion 53 (that is, the stepped portion) is located outside the ultrasonic waves 36 that are transmitted in the shape of the letter V or outside the ultrasonic waves 37 that are transmitted in the shape of the letter V.

Hence, even if disturbance occurs in the fluid 60 in the peripheral wall portion 53 (that is, the stepped portion), there is no concern that disturbance may occur in the ultrasonic waves 36.

Thereby, there is no possibility that the fluid 60 that flows through the inside (channel 26) of the channel body 91 causes disturbance in each region inside or outside the ultrasonic waves 36 that are transmitted in the shape of the letter V, and each region inside or outside the ultrasonic waves 37 that are transmitted in the shape of the letter V

Accordingly, similarly to the first embodiment, disturbance can be prevented from occurring in the ultrasonic waves 36 and the ultrasonic waves 37 due to disturbance of the fluid 60, and the flow rate of a fluid can be precisely measured by the ultrasonic fluid-measuring apparatus 10.

Here, in the channel member 90 (channel body 91) of the fourth embodiment not part of the invention, the peripheral wall portion 53 of the ultrasonic wave input/output section 31 is formed flatly.

Hence, the channel body 91 can be integrally resin-molded similarly to the channel body 17 of the first embodiment.

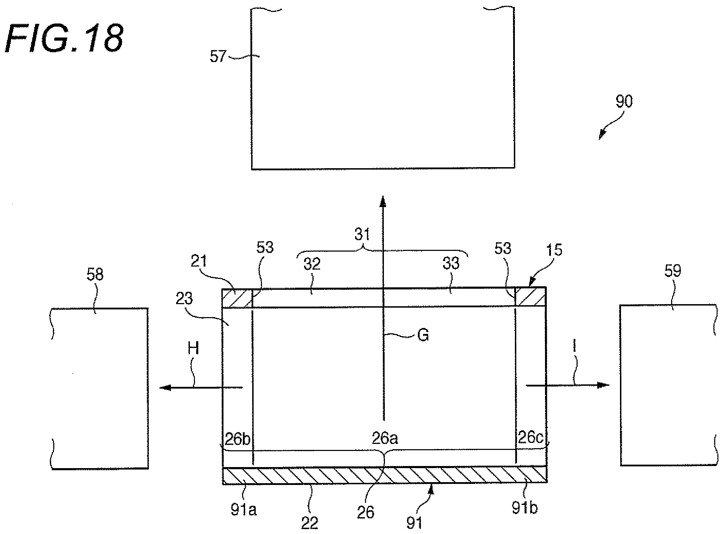

That is, as shown in Fig. 18, by extracting the mold 57 in the direction of an arrow G from the ultrasonic wave input/output section 31 of the channel body 91, the central portion 26a of the channel 26 is formed, and the first side wall part 21 is formed with the ultrasonic wave input/output section 31.

Additionally, by extracting the slide mold 58 in the direction of an arrow H from one end portion 91a of the channel body 91, one end portion 26b of the channel 26 can be formed.

Moreover, by extracting the slide mold 59 in the direction of an arrow I from the other end portion 91b of the channel body 91, the other end portion 26c of the channel 26 can be formed.

Thereby, the first side wall part 21, the second side wall part 22, the top plate part 23, and the bottom plate part 24 (refer to Fig. 9), which constitute the channel body 91, are integrally resin-molded, similarly to the first embodiment.

By integrating the first side wall part 21, the second side wall part 22, the top plate part 23, and the bottom plate part 24, the number of components can be reduced.

Here, when the channel body 91 is resin-molded, similarly to the first embodiment, the plurality of partition plates 28 (refer to Fig. 9) are insert-molded into the first side wall part 21 and the second side wall part 22.

By molding the plurality of partition plates 28 integrally with the first side wall part 21 and the second side wall part 22, time and effort for attaching the plurality of partition plates 28 to the first side wall part 21 and the second side wall part 22 can be saved.

Here, according to the channel member 90 of the fourth embodiment not part of the invention, the same effects as the channel member 15 of the first embodiment can be obtained.

### (Fifth Embodiment)

As shown in Fig. 19, a channel member 100 according to a fifth embodiment not part of the invention has a channel body (body) 101 instead of the channel body 17.

The channel body 101 is adapted so that the ultrasonic wave transmission membrane 38 is attached from the rear surface 21a side (that is, the channel 26 side) of the first side wall part 21 by provided the first ultrasonic wave input/output section 32 and the second ultrasonic wave input/output section 33 so as to be adjacent to each other in the first side wall part 21, forming a housing recess 102 on the rear surface 21a side (that is, the channel 26 side) of the first side wall part 21, and fitting the ultrasonic wave transmission membrane 38 into the housing recess 102.

By providing the first ultrasonic wave input/output section 32 and the second ultrasonic wave input/output section 33 so as to be adjacent to each other, the stepped portion (pillar portion) 51 is formed between the first ultrasonic wave input/output section 32 and the second ultrasonic wave input/output section 33.

Here, the first ultrasonic wave input/output section 32 and the second ultrasonic wave input/output section 33, which are provided so as to be adjacent to each other, are together covered with the ultrasonic wave transmission membrane 38 from the rear surface 21a side (that is, the channel 26 side) of the first side wall part 21.

Hence, the stepped portion (pillar portion) 51 can be covered with the ultrasonic wave transmission membrane 38.

Thereby, the region (region on the side of the included angle θ1, that is, the ultrasonic wave transmission membrane 38) inside the ultrasonic waves 36 that are transmitted in the shape of the letter V, or the region (region on the side of the included angle 01, that is, the ultrasonic wave transmission membrane 38) inside the ultrasonic waves 37 that are transmitted in the shape of the letter V can be secured flatly.

Moreover, by providing the ultrasonic wave transmission membrane 38 from the rear surface 21a side (that is, the channel 26 side) of the first side wall part 21, the ultrasonic wave transmission membrane 38 can be provided flatly with respect to the channel 26 (rear surface 21a).

Thereby, there is no possibility that the fluid 60 that flows through the inside (channel 26) of the channel body 101 causes disturbance in each region inside or outside the ultrasonic waves 36 that are transmitted in the shape of the letter V or in each region inside or outside the ultrasonic waves 37 that are transmitted in the shape of the letter V.

Accordingly, similarly to the first embodiment, disturbance can be prevented from occurring in the ultrasonic waves 36 and the ultrasonic waves 37 due to disturbance of the fluid 60, and the flow rate of a fluid can be precisely measured by the ultrasonic fluid-measuring apparatus 10.

Here, in the channel member 100 (channel body 101) of the fifth embodiment not part of the invention, the housing recess 102 is formed on the rear surface 21a side (that is, the channel 26 side) of the first side wall part 21.

Hence, it is difficult to integrally resin-mold the channel body 101 unlike the channel body 17 of the first embodiment.

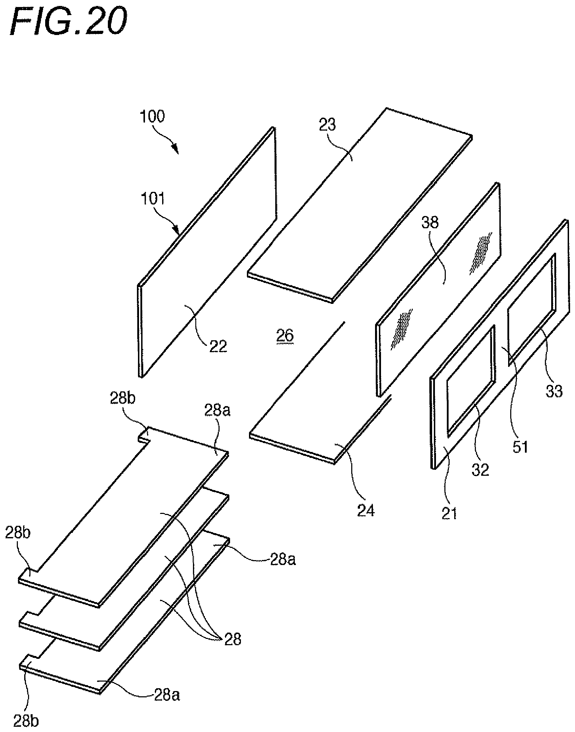

Thus, as shown in Fig. 20, the first side wall part 21, the second side wall part 22, the top plate part 23, and the bottom plate part 24 are constituted by individual members, respectively.

Then, when the first side wall part 21, the second side wall part 22, the top plate part 23, and the bottom plate part 24 are assembled, the ultrasonic wave transmission membrane 38 is attached to the housing recess 102 (refer to Fig. 19) from the rear surface 21a side (that is, the channel 26 side) of the first side wall part 21.

In addition, when the first side wall part 21, the second side wall part 22, the top plate part 23, and the bottom plate part 24 are assembled, the plurality of partition plates 28 are assembled.

In this way, by constituting the first side wall part 21, the second side wall part 22, the top plate part 23, and the bottom plate part 24 from the individual members, respectively, the channel member 100 (channel body 101) of the fifth embodiment not part of the invention can be assembled.

Here, in the channel body 101, the first side wall part 21, the second side wall part 22, the top plate part 23, and the bottom plate part 24 are formed by resinous members, respectively.

Here, according to the channel member 100 of the third embodiment not part of the invention, the same effects as the channel member 15 of the fifth embodiment not part of the invention can be obtained.

### (Sixth Embodiment)

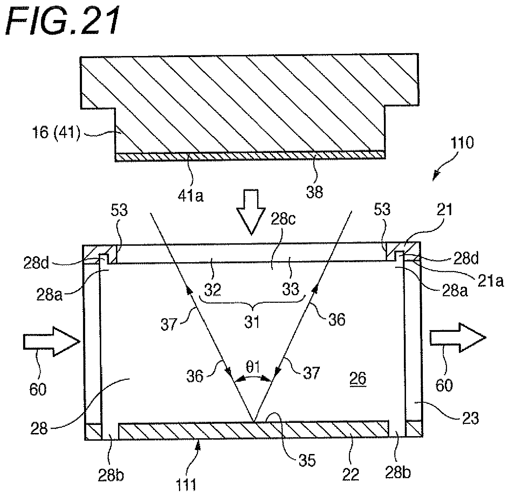

As shown in Fig. 21, a channel member 110 according to a sixth embodiment not part of the invention has a channel body (body) 111 instead of the channel body 17.

In the channel body 111, similarly to the third embodiment not part of the invention show in Figs. 13 and 14, the ultrasonic wave input/output section 31 (the first ultrasonic wave input/output section 32 and the second ultrasonic wave input/output section 33) is formed so that the sensor block 41 of the ultrasonic measuring section 16 can be fitted thereinto.

The bottom surface 41a of the sensor block 41 is provided with the ultrasonic wave transmission membrane 38. Hence, by fitting the sensor block 41 into the ultrasonic wave input/output section 31, the ultrasonic wave input/output section 31 is covered with the ultrasonic wave transmission membrane 38.

That is, the first ultrasonic wave input/output section 32 and the second ultrasonic wave input/output section 33 (that is, the ultrasonic wave input/output section 31), which are provided continuously, are together covered with the ultrasonic wave transmission membrane 38.

Hence, the region (region on the side of the included angle θ1, that is, the ultrasonic wave transmission membrane 38) inside the ultrasonic waves 36 that are transmitted in the shape of the letter V, or the region (region on the side of the included angle θ1, that is, the ultrasonic wave transmission membrane 38) inside the ultrasonic waves 37 that are transmitted in the shape of the letter V can be secured flatly.

In addition, the ultrasonic wave transmission membrane 38 can be provided flatly with respect to the channel 26 (rear surface 21a) in a state where the sensor block 41 is fitted into the ultrasonic wave input/output section 31.

Thereby, there is no possibility that the fluid 60 that flows through the inside (channel 26) of the channel body 111 causes disturbance in each region inside or outside the ultrasonic waves 36 that are transmitted in the shape of the letter V or in each region inside or outside the ultrasonic waves 37 that are transmitted in the shape of the letter V.

Accordingly, similarly to the first embodiment, disturbance can be prevented from occurring in the ultrasonic waves 36 and the ultrasonic waves 37 due to disturbance of a fluid 60, and the flow rate of the fluid 60 can be precisely measured by the ultrasonic fluid-measuring apparatus 10.

Here, in the channel member 110 (channel body 111) of the third embodiment not part of the invention, the peripheral wall portion 53 of the ultrasonic wave input/output section 31 is formed flatly.

Hence, the channel body 81 can be integrally resin-molded similarly to the channel body 17 of the first embodiment or the channel body 81 of the third embodiment not part of the invention.

That is, the first side wall part 21, the second side wall part 22, the top plate part 23, and the bottom plate part 24 (not shown), which constitute the channel body 111, are integrally resin-molded, similarly to the first embodiment or the third embodiment not part of the invention.

By integrating the first side wall part 21, the second side wall part 22, the top plate part 23, and the bottom plate part 24, the number of components can be reduced.

Here, when the channel body 111 is resin-molded, similarly to the first embodiment or a third embodiment not part of the invention, the plurality of partition plates 28 (refer to Fig. 9) are insert-molded into the first side wall part 21 and the second side wall part 22.

In the partition plate 28, upper protruding portions 28d protruded from the upper corner portions 28a, and the lower protruding pieces 28b protrude from the lower corner portions.

Integral molding (insert molding) is performed in a state where the upper corner portions 28a of the plurality of partition plates 28 are molded integrally (insert-molded) and the lower protruding pieces 28b of the plurality of partition plates 28 are passed through the second side wall part 22.

By allowing insert molding in a state where the lower protruding pieces 28b are passed through the second side wall part 22, when the partition plates 28 are insert-molded, the lower protruding pieces 28b can be held by the mold, and the partition plates 28 can be easily positioned at predetermined positions.

In addition, by molding the plurality of partition plates 28 integrally with the first side wall part 21 and the second side wall part 22, time and effort for attaching the plurality of partition plates 28 to the first side wall part 21 and the second side wall part 22 can be saved.

In the channel member 110 of the sixth embodiment not part of the invention, similarly to the first embodiment, the end portions 28c of the plurality of partition plates 28 are brought into contact with the ultrasonic wave transmission membrane 38 in a state where the sensor block 41 is fitted into the ultrasonic wave input/output section 31.

By bringing the ultrasonic wave transmission membrane 38 into contact with the end portions 28c of the plurality of partition plates 28, the gap between the ultrasonic wave transmission membrane 38 and the end portions 28c of the partition plates 28 can be eliminated.

Hence, there is no possibility that disturbance may be caused in a fluid at the gap between the ultrasonic wave transmission membrane 38 and the end portions 28c of the partition plates 28. This can prevent disturbance from occurring in ultrasonic waves due to disturbance of a fluid.

Here, according to the channel member 110 of the sixth embodiment not part of the invention, the same effects as the channel member 15 of the first embodiment can be obtained.

### (Seventh Embodiment)

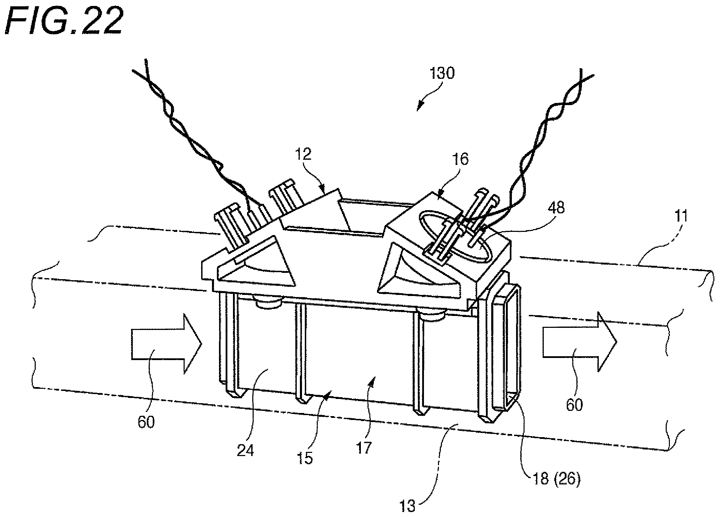

A channel member 130 according to a seventh embodiment of the invention shown in Fig. 22 basically has the same ultrasonic fluid-measuring structure 12 as the first embodiment.

The ultrasonic fluid-measuring structure 12 is accommodated in an accommodating section 13 of a measuring channel 11 that guides fluids, such as gas, to a fluid consumption device (not shown). The ultrasonic fluid-measuring structure 12 includes the channel member 15 accommodated in the accommodating section 13, and an ultrasonic measuring section 16 adjacent to the channel member 15.

Even in such a seventh embodiment, the same effects as the first embodiment mentioned above are obtained.

### (Eighth Embodiment)

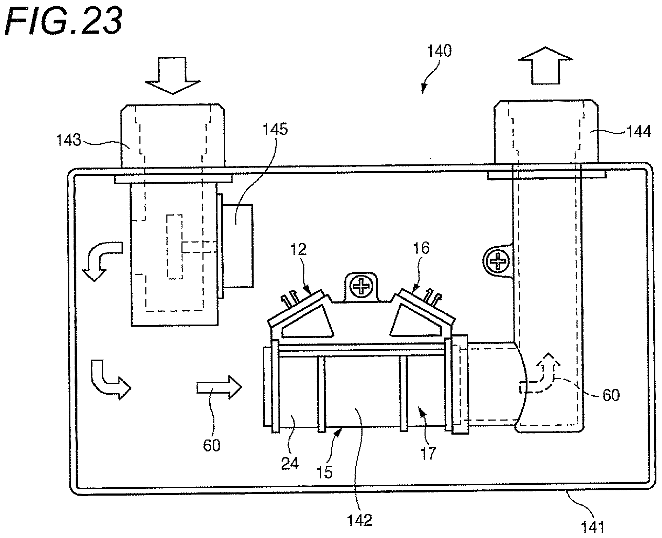

Additionally, in a channel member 140 according to an eighth embodiment of the invention shown in Fig. 23, an ultrasonic fluid-measuring structure 142 is accommodated in a box-shaped apparatus housing 141, for example, is fixed with screws or the like.

The ultrasonic fluid-measuring structure 142 is the basically same as the ultrasonic fluid-measuring structure shown in the first embodiment.

The apparatus housing 141 has an entrance pipe 143 and an exit pipe 144 that allow the inside and the outside to communicate with each other.

The entrance pipe 143 is opened via a shutoff valve 145 inside the apparatus housing 141. The exit pipe 144 is coupled to an opening 18 of the ultrasonic fluid-measuring structure 142 inside the apparatus housing 141.

Accordingly, in the ultrasonic fluid-measuring apparatus 140, the fluid 60 that has flowed into the apparatus housing 141 via the entrance pipe 143 enters from the entrance of the ultrasonic fluid-measuring structure 142, and is discharged to the outside of the apparatus housing 141 via the exit pipe 144.

According to such a seventh embodiment, structure becomes simple, and low costs can be realized.

In addition, the ultrasonic fluid-measuring apparatus 10 and the channel members 15, and 70, 80, 90, 100, 110 are not limited to the aforementioned respective first embodiment according to the invention and second to sixth embodiments not part of the invention, and suitable changes, improvements, or the like can be made.

For example, in the first and second to sixth embodiments, respectively part and not part of the invention, the example in which the channel bodies 17, 71, 81, 91, 101, and 111 are formed of resinous members has been described. However, the invention is not limited to this, and the channel members can also be formed of metal members.

Additionally, the configurations or shapes of the ultrasonic fluid-measuring apparatus 10, the measuring channel 11, the ultrasonic fluid-measuring structure 12, the accommodating section 13, the channel members 15, 70, 80, 90, 100, and 110, the ultrasonic measuring section 16, the channel bodies 17, 71, 81, 91, 101, and 111, the opening 18, the first side wall part 21, the second side wall part 22, the top plate part 23, the bottom plate part 24, the channel 26, the flat channel 27, the partition plates 28, the ultrasonic wave input/output section 31, the first ultrasonic wave input/output section 32, the second ultrasonic wave input/output section 33, the reflecting surface 35, the ultrasonic wave transmission membrane 38, the first transmitter/receiver 42, the second transmitter/receiver 43, or the like, which are used in the first embodiment according to the invention and in the second to sixth embodiments not part of the invention, are not limited to those illustrated, and can be suitably changed.

The present application is based on Japanese Patent Application No. 2009-266426 filed on November 24, 2009.

### Reference Signs List

- 10:: ULTRASONIC FLUID-MEASURING APPARATUS
- 11:: MEASURING CHANNEL
- 12:: ULTRASONIC FLUID-MEASURING STRUCTURE
- 13:: ACCOMMODATING SECTION
- 15, 70, 80, 90, 100, 110, 130, 140:: CHANNEL MEMBER
- 16:: ULTRASONIC MEASURING SECTION
- 17, 71, 81, 91, 101, 111:: CHANNEL BODY (BODY)
- 18:: OPENING
- 21:: FIRST SIDE WALL PART
- 22:: SECOND SIDE WALL PART
- 23:: TOP PLATE PART
- 24:: BOTTOM PLATE PART
- 26:: CHANNEL
- 27:: FLAT CHANNEL
- 28:: PARTITION PLATE
- 31:: ULTRASONIC-WAVE INPUT/OUTPUT SECTION
- 32:: FIRST ULTRASONIC WAVE INPUT/OUTPUT SECTION
- 33:: SECOND ULTRASONIC WAVE INPUT/OUTPUT SECTION
- 35:: REFLECTING SURFACE
- 36, 37:: ULTRASONIC WAVE
- 38:: ULTRASONIC WAVE TRANSMISSION MEMBRANE
- 42:: FIRST TRANSMITTER/RECEIVER
- 43:: SECOND TRANSMITTER/RECEIVER
- 60:: FLUID

## Claims

1. A channel member (15), comprising:
a body (17) in which a rectangular opening (18) is continuous along a flow direction of a fluid (60), the body including a first side wall part (21) and a second side wall part (22) that are parallel to each other, a first ultrasonic wave input/output section (32) and a second ultrasonic wave input/output section (33) that are provided in the first side wall part (21),
a reflecting surface (35) provided on an inner surface of the second side wall part (22),
a top plate part (23) and a bottom plate part (24) that are bridged between the first side wall part (21) and the second side wall part (22), and
an ultrasonic wave transmission membrane (38) that covers the first ultrasonic wave input/output section (32) and the second ultrasonic wave input/output section (33) and transmits ultrasonic waves (36, 37) therethrough,
**characterized in that**
the first ultrasonic wave input/output section (32) and the second ultrasonic wave input/output section (33) are continuous with each other,
the ultrasonic wave transmission membrane (38) covers both the first ultrasonic wave input/output section (32) and the second ultrasonic wave input/output section (33) together,
housing recesses (55) are formed on a front surface (21b) side of the first side wall part (21) by forming stepped portions (54) at peripheral wall portions (53) of the first ultrasonic wave input/output section (32) and the second ultrasonic wave input/output section (33); and
the ultrasonic wave transmission membrane (38) is fitted into the housing recesses (55) from the front surface (21b) side of the first side wall part (21).

2. The channel member according to claim 1, wherein
the first side wall part (21), the second side wall part (22), the top plate part (23), and the bottom plate part (24) are integral together.

3. The channel member according to claim 1, comprising
a partition plate (28) that divides an inside of the channel member into a plurality of flat channels, and
the partition plate (28) is molded integrally with the first side wall part (21) and the second side wall part (22).

4. The channel member according to claim 2, wherein
the ultrasonic wave transmission membrane (38) and the partition plate (28) come into contact with each other.

5. An ultrasonic fluid-measuring apparatus (10) comprising the channel member as defined in any one of claim 1 to claim 4.

## Patentansprüche

1. Kanalglied (15), aufweisend:
einen Körper (17), in welchem eine rechteckige Öffnung (18) kontinuierlich bzw. fortlaufend entlang einer Strömungsrichtung eines Fluides (60) ist, wobei der Körper enthält:
ein erstes Seitenwandteil (21) und ein zweites Seitenwandteil (22), die parallel zueinander sind,
einen ersten Ultraschallwelleneingabe/-ausgabeabschnitt (32) und einen zweiten Ultraschallwelleneingabe/-ausgabeabschnitt (33), die in dem ersten Seitenwandteil (21) zur Verfügung gestellt sind,
eine Reflexionsfläche bzw. reflektierende Fläche (35), die auf einer Innenfläche des zweiten Seitenwandteils (22) zur Verfügung gestellt ist,
einen oberen Plattenteil (23) und einen unteren bzw. Bodenplattenteil (24), die zwischen dem ersten Seitenwandteil (21) und dem zweiten Seitenwandteil (22) erstreckt bzw. überbrückt sind, und
eine Ultraschallwellenübertragungsmembran (38), die den ersten Ultraschallwelleneingabe/-ausgabeabschnitt (32) und den zweiten Ultraschallwelleneingabe/- ausgabeabschnitt (33) bedeckt und Ultraschallwellen (36, 37) dort hindurch überträgt, **dadurch gekennzeichnet, dass**
der erste Ultraschallwelleneingabe/-ausgabeabschnitt (32) und der zweite Ultraschallwelleneingabe/-ausgabeabschnitt (33) kontinuierlich bzw. fortlaufend miteinander sind,
die Ultraschallwellenübertragungsmembran (38) sowohl den ersten Ultraschallwelleneingabe/-ausgabeabschnitt (32) und den zweiten Ultraschallwellen/- ausgabeabschnitt (33) zusammen bedeckt,
wobei Gehäuseausnehmungen (55) auf einer Front- bzw. Vorderflächenseite (21b) des ersten Seitenwandteils (21) durch Bilden gestufter Abschnitte (54) an umfänglichen bzw. peripheren Wandabschnitten (53) des ersten Ultraschallwelleneingabe/-ausgabeabschnitts (32) und des zweiten Ultraschallwelleneingabe/-ausgabeabschnitts (33) gebildet bzw. geformt sind; und
wobei die Ultraschallwellenübertragungsmembran (38) in die Gehäuseausnehmungen (55) von der Front- bzw. Vorderflächenseite (21b) des ersten Seitenwandteils (21) eingefügt bzw. eingepasst ist.

2. Kanalglied gemäß Anspruch 1, wobei der erste Seitenwandteil (21), der zweite Seitenwandteil (22), der obere Plattenteil (23) und der untere bzw. Bodenplattenteil (24) zusammen integral bzw. eine Einheit bildend sind.

3. Kanalglied gemäß Anspruch 1, aufweisend:
eine Trennplatte (28), die ein Inneres des Kanalgliedes in mehrere flache Kanäle teilt, und
wobei die Trennplatte (28) integral bzw. einstückig mit dem ersten Seitenwandteil (21) und dem zweiten Seitenwandteil (22) gebildet bzw. geformt ist.

4. Kanalglied gemäß Anspruch 2, wobei die Ultraschallwellenübertragungsmembran (38) und die Trennplatte (28) in Kontakt miteinander kommen.

5. Ultraschallfluidmessapparat (10), aufweisend
das Kanalglied wie in irgendeinem von Anspruch 1 bis Anspruch 4 definiert.

## Revendications

1. Elément de canal (15), comprenant :
un corps (17) dans lequel une ouverture rectangulaire (18) est continue le long d'une direction d'écoulement d'un fluide (60), le corps comprenant
une première partie de paroi latérale (21) et une deuxième partie de paroi latérale (22) qui sont parallèles l'une à l'autre,
une première section d'entrée / sortie d'onde ultrasonore (32) et une deuxième section d'entrée / sortie d'onde ultrasonore (33) qui sont prévues dans la première partie de paroi latérale (21),
une surface réfléchissante (35) prévue sur une surface intérieure de la deuxième partie de paroi latérale (22),
une partie de plaque supérieure (23) et une partie de plaque inférieure (24) qui sont pontées entre la première partie de paroi latérale (21) et la deuxième partie de paroi latérale (22) et
une membrane de transmission d'onde ultrasonore (38) qui couvre la première section d'entrée / sortie d'onde ultrasonore (32) et la deuxième section d'entrée / sortie d'onde ultrasonore (33) et
transmet des ondes ultrasonores (36, 37) à travers celles-ci,
**caractérisé en ce que**
la première section d'entrée / sortie d'onde ultrasonore (32) et la deuxième section d'entrée / sortie d'onde ultrasonore (33) sont continue l'une avec l'autre,
la membrane de transmission d'onde ultrasonore (38) couvre à la fois la première section d'entrée / sortie d'onde ultrasonore (32) et la deuxième section d'entrée / sortie d'onde ultrasonore (33) ensemble,
des cavités de logement (55) sont formées sur une surface avant (21b) de la première partie de paroi latérale (21) en formant des parties étagées (54) au niveau des parties de paroi périphérique (53) de la première section d'entrée / sortie d'onde ultrasonore (32) et de la deuxième section d'entrée / sortie d'onde ultrasonore (33) ; et
la membrane de transmission d'onde ultrasonore (38) est montée dans les cavités de logement (55) à partir du côté de la surface avant (21b) de la première partie de paroi latérale (21).

2. Elément de canal selon la revendication 1, dans lequel
la première partie de paroi latérale (21), la deuxième partie de paroi latérale (22), la partie de plaque supérieure (23) et la partie de plaque inférieure (24) sont intégrales ensemble.

3. Elément de canal selon la revendication 1, comprenant
une plaque de séparation (28) qui divise un intérieur de l'élément de canal en une pluralité de canaux plats, et
la plaque de séparation (28) est moulée intégralement avec la première partie de paroi latérale (21) et la deuxième partie de paroi latérale (22).

4. Elément de canal selon la revendication 2, dans lequel
la membrane de transmission d'onde ultrasonore (38) et la plaque de séparation (28) viennent en contact l'une avec l'autre.

5. Appareil de mesure de fluide à ultrasons (10) comprenant
l'élément de canal tel que défini dans l'une quelconque des revendications 1 à 4.
